# EUROPÄISCHE PATENTANMELDUNG

(11) **EP 4 462 557 A1**
(43) Veröffentlichungstag der Anmeldung: **13.11.2024**
(21) Anmeldenummer: 23172205.9
(22) Anmeldetag: 09.05.2023
(51) Int. Cl.: H01M 50/204, H01M 10/6553, H01M 50/249

(54) **VERFAHREN ZUR HERSTELLUNG ZUMINDEST EINES BATTERIEGEHÄUSETEILS SOWIE BATTERIEGEHÄUSETEIL UND VORRICHTUNG ZUR HERSTELLUNG EINES BATTERIEGEHÄUSETEILS**

(71) Anmelder: Nemak, S.A.B. de C.V., 66017 García, Nuevo León (MX)
(72) Erfinder: Wickert, Christopher, 65934 Frankfurt am Main (DE); Marsch, Stefan, 51491 Overath (DE)
(74) Vertreter: Cohausz & Florack

(57) **Zusammenfassung**

Die Erfindung betrifft ein Verfahren zur Herstellung zumindest eines Batteriegehäuseteils (2), insbesondere einer Batteriewanne, für ein elektrisch angetriebenes Fahrzeug, umfassend die folgenden Schritte: Bereitstellen zumindest einer Bodenplatte (4); Bereitstellen zumindest einer Batteriegehäuseaufnahme (8) zur zumindest teilweisen Aufnahme von zumindest einer Batteriezelle und/oder zumindest einem Batteriemodul, wobei die zumindest eine Batteriegehäuseaufnahme (8) wenigstens einen im Wesentlichen plattenförmigen Bodenabschnitt (10) umfasst und wobei der im Wesentlichen plattenförmige Bodenabschnitt (10) an einer Oberfläche (14) eine Mehrzahl an Kanälen (16) umfasst; Fügen der zumindest einen Bodenplatte (4) und der zumindest einen Batteriegehäuseaufnahme (8) miteinander, wobei die die Mehrzahl an Kanälen (16) aufweisende Oberfläche (14) des plattenförmigen Bodenabschnitts (10) der Batteriegehäuseaufnahme (8) zu der Bodenplatte (4) gerichtet ist. Die Erfindung betrifft ebenfalls ein Batteriegehäuseteil sowie eine Vorrichtung zur Herstellung eines Batteriegehäuseteils.

## Beschreibung

Die vorliegende Erfindung betrifft ein Verfahren zur Herstellung zumindest eines Batteriegehäuseteils, insbesondere einer Batteriewanne, für ein elektrisch angetriebenes Fahrzeug. Ferner betrifft die vorliegende Erfindung ein Batteriegehäuseteil, insbesondere eine Batteriewanne, für ein Fahrzeug, insbesondere für ein elektrisch angetriebenes Fahrzeug. Zudem betrifft die vorliegende Erfindung eine Vorrichtung zur Herstellung eines Batteriegehäuseteils, insbesondere einer Batteriewanne, für ein Fahrzeug.

Elektrisch angetriebene Fahrzeuge der hier in Rede stehenden Art führen in der Regel eine Mehrzahl an Batteriemodulen umfassend Batteriezellen mit sich, die als Antriebsenergiespeicher dienen und die für den Fahrbetrieb benötigte elektrische Energie zur Verfügung stellen. Insbesondere handelt es sich bei einem elektrisch angetriebenen Fahrzeug der hier in Rede stehenden Art um ein Elektroauto, welches im Wesentlichen ausschließlich von einem Elektromotor oder mehreren Elektromotoren angetrieben wird. Alternativ kann das vorgenannte Batteriegehäuseteil auch bei einem Hybrid-Fahrzeug eingesetzt werden, welches zusätzlich zu einem Elektromotor noch einen Verbrennungsmotor aufweist.

Im Hinblick auf das Fahrverhalten hat sich eine Platzierung der einzelnen Batteriemodule im Bodenbereich des Fahrzeugs als zielführend herausgestellt. Um dies zu ermöglichen, sind Batteriegehäuseteile vorgeschlagen worden, die im Wesentlichen flach und plattenartig ausgebildet sind. Derartige Batteriegehäuseteile lassen sich im Bodenbereich des Fahrzeugs anordnen und mit der Karosserie des Fahrzeugs verbinden.

Dementsprechend werden erhebliche Anforderungen an Batteriegehäuseteile bzw. Batteriegehäuse gestellt. Batteriegehäuseteile, wie insbesondere eine Batteriewanne, sollen nicht nur die einzelnen Batteriemodule bzw. Batteriezellen tragen, sondern auch für eine ausreichende Sicherheit während des Fahrbetriebs des Fahrzeugs sorgen.

Demnach sollen derartige Batteriegehäuseteile zum einen dynamische Belastungen in ausreichender Weise aufnehmen, andererseits aber auch ein Überhitzen der einzelnen Batteriemodule bzw. der einzelnen Batteriezellen verhindern. Zum Abführen der während des Fahrbetriebs entstehenden Wärme ist es aus dem Stand der Technik bekannt, die in Rede stehenden Batteriegehäuseteile mit einer Kühlvorrichtung zu versehen, die die beim Laden und Entleeren der Batteriemodule bzw. Batteriezellen freiwerdende Wärme zuverlässig abführt.

Mitunter führen in den Batteriegehäuseteilen angeordnete Kühlvorrichtungen jedoch zu aufwändigen Herstellungsprozessen für die einzelnen Batteriegehäuseteile und können auch nachteilige dynamische Eigenschaften während des Fahrbetriebs des Fahrzeugs bedingen.

Vor diesem Hintergrund liegt der vorliegenden Erfindung die Aufgabe zugrunde, ein Verfahren zur Herstellung eines Batteriegehäuseteils sowie eine Vorrichtung zur Herstellung eines Batteriegehäuseteils anzugeben, welche eine vereinfachte und kostengünstige Herstellung des Batteriegehäuseteils unter zur Verfügungstellung vorteilhafter mechanischer Eigenschaften sowie vorteilhafter Kühleigenschaften ermöglicht. Ebenfalls liegt der vorliegenden Erfindung die Aufgabe zugrunde, ein Batteriegehäuseteil anzugeben, welches vorteilhafte mechanische Eigenschaften und vorteilhafte Kühleigenschaften aufweist.

Die vorgenannte Aufgabe wird gemäß einem ersten Aspekt der vorliegenden Erfindung bei einem Verfahren zur Herstellung eines Batteriegehäuseteils, insbesondere einer Batteriewanne, für ein elektrisch angetriebenes Fahrzeug dadurch gelöst, dass das Verfahren folgende Schritte umfasst:
- Bereitstellen zumindest einer Bodenplatte;
- Bereitstellen zumindest einer Batteriegehäuseaufnahme zur zumindest teilweisen Aufnahme von zumindest einer Batteriezelle und/oder zumindest einem Batteriemodul, wobei die zumindest eine Batteriegehäuseaufnahme wenigstens einen im Wesentlichen plattenförmigen Bodenabschnitt umfasst und wobei der im Wesentlichen plattenförmige Bodenabschnitt an einer Oberfläche eine Mehrzahl an Kanälen umfasst; und
- Fügen der zumindest einen Bodenplatte und der zumindest einen Batteriegehäuseaufnahme miteinander, wobei die die Mehrzahl an Kanälen aufweisende Oberfläche des plattenförmigen Bodenabschnitts der Batteriegehäuseaufnahme vorzugsweise zu der Bodenplatte gerichtet ist,
- Andrücken der zumindest einen Bodenplatte und der zumindest einen Batteriegehäuseaufnahme mittels wenigstens eines Druckkissens,
- wobei das wenigstens eine Druckkissen die Batteriegehäuseaufnahme, insbesondere die von der Bodenplatte abgewandte Oberfläche des plattenförmigen Bodenabschnitts der Batteriegehäuseaufnahme, unmittelbar oder mittelbar über eine Andrückeinheit an die Bodenplatte andrückt.

Durch vorgenanntes Verfahren kann in konstruktiv günstiger Hinsicht ein Batteriegehäuseteil, insbesondere eine Batteriewanne, zur Verfügung gestellt werden, die eine integrierte Kühlung aufweist. Bei einem Fügen handelt es sich insbesondere um ein Verbinden des Batteriegehäuseaufnahme und der Bodenplatte. Vorzugweise handelt es sich um ein stoffschlüssiges Verbinden, wobei die stoffschlüssige Verbindung insbesondere irreversibel ist.

Bei der Bodenplatte handelt es sich vorzugsweise um ein im Wesentlichen plattenförmiges Teil, insbesondere um ein im Wesentlichen plattenförmiges Blech. Es ist ebenfalls denkbar, dass nur ein Teil der Bodenplatte plattenförmig ausgebildet ist und ein weiterer Bereich der Bodenplatte beispielsweise einen auskragenden Bereich und/oder einen abgewinkelten Bereich aufweist. Ein solcher Bereich kann beispielsweise durch ein Tiefziehen des Blechs hergestellt werden.

Die Batteriegehäuseaufnahme dient insbesondere dazu, dass zumindest eine Batteriezelle und/oder zumindest ein Batteriemodul zumindest teilweise in oder auf der Batteriegehäuseaufnahme angeordnet werden können. Dabei kann die zumindest eine Batteriezelle und/oder das zumindest eine Batteriemodul sowohl unmittelbar als auch mittelbar auf oder in der Batteriegehäuseaufnahme angeordnet sein.

Die Batteriegehäuseaufnahme weist einen im Wesentlichen plattenförmigen Bodenabschnitt auf, auf welchem die zumindest eine Batteriezelle und/oder das zumindest eine Batteriemodul mittelbar oder unmittelbar angeordnet sein können. Der plattenförmige Bodenabschnitt kann beispielsweise in Form eines im Wesentlichen plattenförmigen Blechs zur Verfügung gestellt werden. Der plattenförmige Bodenabschnitt kann allerdings auch Prägungen und/oder abgewinkelte Bereiche aufweisen.

Vorzugsweise ist die Mehrzahl der an der Oberfläche des plattenförmigen Bodenabschnitts angeordneten Kanäle durch geprägte und/oder gestanzte Bleche bzw. Blechteile gebildet. Des Weiteren ist es bevorzugt, dass die geprägten und/oder gestanzten Bleche bzw. Blechteile mit dem plattenförmigen Bodenabschnitt der Batteriegehäuseaufnahme gelötet, insbesondere ofengelötet, sind. Dies ermöglicht eine zuverlässige Verbindung sowie eine zuverlässige Abdichtung zwischen der Mehrzahl an Kanälen und dem im Wesentlichen plattenförmigen Bodenabschnitt der Batteriegehäuseaufnahme, wobei zudem der im Wesentlichen plattenförmige Bodenabschnitt mit der Mehrzahl der Kanäle an einer Oberfläche kostengünstig zur Verfügung gestellt werden kann.

Weiter ist es bevorzugt, dass die Mehrzahl an Kanälen sich im Wesentlichen über eine gesamte plattenförmige Oberfläche des plattenförmigen Bodenabschnitts erstrecken.

Alternativ ist es ebenfalls möglich, dass sich die Mehrzahl an Kanälen nur über bestimmte Bereiche der Oberfläche des plattenförmigen Bodenabschnitts erstreckt. Vorzugsweise ist die Mehrzahl der Kanäle an einer im Wesentlichen flachen und/oder plattenförmigen Oberfläche des plattenförmigen Bodenabschnitts der Batteriegehäuseaufnahme angeordnet, insbesondere mit dieser verlötet.

Bei den Kanälen kann es sich um im Querschnitt offene Kanäle oder um im Querschnitt geschlossene Kanäle bzw. Kühlkanäle handeln. Vorliegend kann auch ein im Wesentlichen miteinander verbundener offener Kanal bzw. ein im Wesentlichen verbundener geschlossener Kanal als eine Mehrzahl an offenen Kanälen bzw. eine Mehrzahl an geschlossenen Kühlkanälen angesehen werden.

Das Fügen der zumindest einen Bodenplatte mit der zumindest einen Batteriegehäuseaufnahme kann insbesondere ein Verkleben mittels eines Klebstoffs und/oder ein Verschäumen mittels eines Schaummaterials umfassen.

Durch die Verwendung zumindest eines Druckkissen kann ein im Wesentlichen homogener bzw. gleichflächiger Druck auf die zu verfügenden Bauteile, nämlich die Bodenplatte und die Batteriegehäuseaufnahme zur Verfügung gestellt werden, so dass ein hinreichendes Verfügen, insbesondere mit Hinblick auf die zur Verfügung gestellte Mehrzahl an Kanälen, gewährleistet wird. Insbesondere kann hierdurch den während des Verfügens auftretenden Drücken, die beispielsweise durch eine Reaktion des Klebstoffes und/oder des Schaummaterials auftreten, entgegengewirkt werden.

Das wenigstens eine Druckkissen kann aus einem flexiblen Vollmaterial, insbesondere einem weichelastischen Material wie z.B. Gummi oder Silikon gebildet sein. Das Druckkissen kann auch ein expandierbares bzw. aufpumpbares Druckkissen, wie beispielsweise ein pneumatisch aufblasbares oder hydraulisch aufweitbares Kissen sein, wobei die Kissenhülle beispielsweise aus Gummi oder Silikon gebildet sein kann. Vorzugsweise wird im Rahmen des Verfahrens eine Mehrzahl an Druckkissen verwendet, da dies zu einer weiter verbesserten Druckverteilung bzw. Kraftverteilung beiträgt. Des Weiteren ist es bevorzugt, dass das wenigstens eine Druckkissen ein Gewebe aufweist.

Das wenigstens eine Druckkissen drückt die Batteriegehäuseaufnahme, insbesondere die von der Bodenplatte abgewandte Oberfläche des plattenförmigen Bodenabschnitts der Batteriegehäuseaufnahme, unmittelbar oder mittelbar über mindestens eine Andrückeinheit an die Bodenplatte an. Insbesondere wird die von der Bodenplatte abgewandte Oberfläche des plattenförmigen Bodenabschnitts der Batteriegehäuseaufnahme unmittelbar oder mittelbar mit einem Andrückdruck und/oder einer Andrückkraft mittels des wenigstens einen Druckkissens beaufschlagt. Eine mittelbare Beaufschlagung mittels zumindest einer Andrückeinheit kann sich dahingehend als vorteilhaft erweisen, dass die Druckverteilung bzw. die Kraftverteilung während des Andrückschritts weiter verbessert wird. Vorzugsweise wird eine mittelbare Beaufschlagung mittels zumindest einer Andrückeinheit durchgeführt. Bei der Andrückeinheit kann es sich beispielsweise um eine Andrückplatte, insbesondere um eine metallische Andrückplatte, handeln. Eine unmittelbare Beaufschlagung kann zu einer konstruktiv simpleren Vorrichtung führen, wodurch Kosten in der Herstellung des zumindest einen Batteriegehäuseteils eingespart werden können.

Bei einer bevorzugten Ausgestaltung ist das wenigstens eine Druckkissen mit einem Druck beaufschlagbar und/oder mit Druckluft befüllbar, wobei der beaufschlagte Druck indikativ für die von dem wenigstens einen Druckkissen ausgeübte Andrückkraft und/oder für den von dem wenigstens einen Druckkissen ausgeübten Andrückdruck ist. Dies ermöglicht ein zuverlässiges Fügen, insbesondere ein zuverlässiges Verkleben und/oder Verschäumen, von Bodenplatte und Batteriegehäuseaufnahme. Vorzugsweise ist die Höhe des Drucks zur Beaufschlagung des wenigstens einen Druckkissens regelbar und/oder steuerbar. Dies ermöglicht eine passgenaue Einstellung der ausgeübten Andrückkraft bzw. des ausgeübten Andrückdrucks, so dass ein vorteilhaftes Fügen zwischen Bodenplatte und Batteriegehäuseaufnahme ermöglicht werden kann. Vorteilhafterweise kann der Druck des wenigstens einen Druckkissens während des Fügeschritts aufrechterhalten und/oder verändert werden, so dass ein zuverlässiges Aushärten bzw. Gelieren eines Klebstoffes und/oder eines Schaummaterials über einen gewissen Zeitraum ermöglicht werden kann. Vorzugsweise ist das wenigstens eine Druckkissen dazu ausgelegt, einem Druck von bis zu 18 bar standzuhalten. Insbesondere hat es sich als vorteilhaft erwiesen, einen Druck von bis zu 10 bar, insbesondere von bis zu 6 bar während des Fügeschritts vorzusehen. Durch vorgenannte Drücke können vorteilhafte Zuhaltekräfte zur Verfügung gestellt werden, so dass Druck und/oder Wärmeentwicklungen des Klebstoffes und/oder des Schaummaterials während einer thermoreaktiven Phase des Klebstoffes und/oder des Schaummaterials entgegengewirkt werden kann.

Bei einer weiteren bevorzugten Ausgestaltung ist das wenigstens eine Druckkissen vorzugsweise als wenigstens ein Druckschlauch, insbesondere als wenigstens ein Gewebedruckschlauch ausgebildet und/oder das wenigstens eine Druckkissen, insbesondere der wenigstens eine Gewebedruckschlauch, ist mit temperierter Luft, insbesondere temperierter Druckluft, beaufschlagbar oder befüllbar. Vorzugsweise weist der wenigstens eine Druckschlauch eine gewebte, textile Außenhülle und eine gummierte Innenhülle auf. Hierdurch können die Batteriegehäuseaufnahmen und Bodenplatten mit temperierter Druckluft stoffschlüssig in vorteilhafter Weise verbunden werden. Beispielsweise kann ein thermischer Haushalt eingestellt werden, der hinsichtlich der offenen Zeit und/oder der Aushärtezeit des Schaummaterials und/oder des Klebstoffs vorteilhaft ist. Insbesondere können hierdurch verringerte Taktzeiten ermöglicht werden. Vorgenannte Druckschläuche weisen zudem eine hohe Flexibilität, vorteilhafte Verrottungsfestigkeiten und Wartungseigenschaften sowie eine gute Kältefestigkeit auf. Bei den vorgenannten Druckschläuchen kann es sich insbesondere um handelsübliche Feuerwehrschläuche handeln.

Es ist bevorzugt, dass die temperierte Luft, insbesondere die temperierte Druckluft, eine Temperatur aufweist, die über der Umgebungstemperatur liegt. Insbesondere weist die temperierte Druckluft eine Temperatur von über 25°C, insbesondere von über 35°C, besonders bevorzugt von über 45°C, auf.

Des Weiteren ist bevorzugt, dass mindestens ein Druckkissen vorgesehen ist, wobei das mindestens eine Druckkissen im Wesentlichen gleichmäßig mit Druckluft, insbesondere mit erwärmter Druckluft, gefüllt und demnach eine gleichmäßige Andrückkraft auf die Batteriegehäuseaufnahme und/oder die Bodenplatte ausübt. Hierdurch können während des Fügeprozesses entstehende Drücke und/oder Wärmeentwicklungen kompensiert werden, die beispielsweise während der thermoreaktiven Phase des Klebstoffes und/oder des Schaummaterials auftreten können. Durch den Betrieb mit erwärmter Druckluft kann die Erwärmung in der unteren Werkzeughälfte kalorisch unterstützt werden.

Bei der offenen Zeit des Schaummaterials und/oder des Klebstoffs handelt es sich insbesondere um die Zeitspanne von Beginn des Auftragens des Schaummaterials und/oder des Klebstoffs bis zum Zusammenfügen oder zum Verbinden der Fügeteile. Die Aushärtezeit kennzeichnet insbesondere die Zeit, in welcher sich die Endfestigkeit des Schaummaterials und/oder des Klebstoffs einstellt. In diesem Zusammenhang ist es bevorzugt, dass die Temperatur der zu fügenden Bauteile der Batteriegehäuseteile, insbesondere die Temperatur der Batteriegehäuseaufnahmen, der Rahmen und/oder der Bodenplatte, und/oder die Temperatur des Schaummaterials und/oder des Klebstoffs, während des Verfahrens in einem Bereich von 25°C bis 55°C insbesondere in einem Bereich von 27°C bis 50°C liegt.

Des Weiteren ist es bevorzugt, dass die während des Fügeprozesses herrschende Temperatur mittels mindestens eines Sensormittels gemessen wird und dass die Menge und/oder die Temperatur der temperierten Luft in Abhängigkeit der von dem mindestens einen Sensormittel gemessenen Temperatur gesteuert wird. Hierdurch kann während des Fügeschritts in zuverlässiger Weise die gewünschte Temperatur eingestellt werden.

Eine bevorzugte Ausgestaltung ist dadurch gekennzeichnet, dass vor dem Schritt des Fügens ein Schaummaterial und/oder ein Klebstoff zwischen die zumindest eine Bodenplatte und die zumindest eine Batteriegehäuseaufnahme eingebracht wird. Insbesondere wird das Schaummaterial und/oder der Klebstoff zwischen der zu der Bodenplatte zeigenden Oberfläche des plattenförmigen Bodenabschnitts und der Bodenplatte eingebracht. Dies ermöglicht ein zuverlässiges Fügen, insbesondere ein zuverlässiges Verkleben von Bodenplatte und Batteriegehäuseaufnahme während des Fügeschritts.

Eine weitere bevorzugte Ausgestaltung ist dadurch gekennzeichnet, dass die Mehrzahl an Kanälen als Mehrzahl an offenen Kanälen ausgebildet ist, und dass durch das Andrücken der zumindest einen Bodenplatte und der zumindest einen Batteriegehäuseaufnahme eine Mehrzahl an geschlossenen Kühlkanälen zur Verfügung gestellt wird. Hierdurch ist es ausreichend, dass die Batteriegehäuseaufnahme an ihrem plattenförmigen Bodenabschnitt eine Mehrzahl an offenen Kanälen aufweist, die nicht in fertigungstechnischer Weise aufwändig geschlossen ausgebildet werden müssen. Anschließend können die Mehrzahl an offenen Kanälen durch das Fügen der Batteriegehäuseaufnahme mit der Bodenplatte geschlossen werden, so dass durch das Fügen eine Mehrzahl an geschlossenen Kühlkanälen entsteht bzw. zur Verfügung gestellt wird.

Es ist bevorzugt, dass die Mehrzahl an offenen Kanälen insbesondere durch offene Kanäle gebildet wird, deren Querschnitt zu der von dem plattenförmigen Bodenabschnitt weg zeigenden Oberfläche offen ist.

Vorzugsweise wird die zumindest eine Bodenplatte auf die Mehrzahl der Kanäle gefügt, insbesondere mit diesen verbunden, so dass durch den Fügeschritt eine Mehrzahl an im Querschnitt geschlossenen Kanälen entsteht.

Es ist bevorzugt, dass das Schaummaterial im Bereich der offenen Kanäle Aussparungen aufweist, so dass sichergestellt werden kann, dass die offenen Kanäle bzw. die geschlossenen Kühlkanäle nicht durch das Schaummaterial verstopfen und Kühlfluid zuverlässig transportiert werden kann.

Bei einer weiteren Ausgestaltung sind die Mehrzahl an Kanälen bereits als im Wesentlichen geschlossene Kühlkanäle auf der Batteriegehäuseaufnahme vorgesehen. Dies hat sich insbesondere im Hinblick auf die Abdichtung der zur Verfügung gestellten Kühlkanäle als vorteilhaft erwiesen.

Eine weitere bevorzugte Ausgestaltung ist dadurch gekennzeichnet, dass das Schaummaterial und/oder der Klebstoff auf die die Mehrzahl an Kanälen aufweisende Oberfläche des plattenförmigen Bodenabschnitts der zumindest einen Batteriegehäuseaufnahme und/oder auf die Bodenplatte aufgebracht wird. Durch das Schaummaterial und/oder den Klebstoff kann eine Masse zur Verfügung gestellt werden, die einerseits für eine ausreichende Abdichtung sorgen kann und andererseits auch für eine ausreichende Verbindung zwischen der zumindest einen Batteriegehäuseaufnahme und der zumindest einen Bodenplatte. Ebenfalls kann das Schaummaterial und/oder der Klebstoff hinsichtlich einer Isolierung vorteilhaft sein sowie die Crash-Eigenschaften des Batteriegehäuseteils durch ein Ableiten von Kräften an der Unterseite des Fahrzeugs im Falle eines Unfalls verbessern.

Insbesondere ist es bevorzugt, dass das Schaummaterial und/oder der Klebstoff im Falle der Ausbildung der Mehrzahl an Kanälen als Mehrzahl an offenen Kanälen im Wesentlichen nur auf die die offenen Kanäle begrenzenden Wandungen und/oder Rippen und/oder diejenigen Bereiche des plattenförmigen Bodenabschnitts, welche keine offenen Kanäle aufweisen, aufgebracht wird. Dies ist insbesondere dahingehend vorteilhaft, dass dann die durch die Bodenplatte und die offenen Kanäle gebildeten Kühlkanäle nicht oder nur geringfügig durch das Schaummaterial und/oder den Klebstoff verstopft werden und demnach im bestimmungsgemäßen Betrieb des zumindest einen Batteriegehäuseteils eine ausreichende Kühlleistung zur Verfügung stellen können.

Bei einer weiteren Ausgestaltung betreffend die Ausgestaltung der Mehrzahl an Kanälen als offene Kanäle ist es bevorzugt, dass beim Fügen der zumindest einen Bodenplatte und der zumindest einen Batteriegehäuseaufnahme miteinander und/oder während des Fügeschritts eine Gegenkraft, beispielsweise ein pneumatischer Druck, zumindest teilweise innerhalb der offenen Kanäle und/oder der im Laufe des Fügeschritts geschlossenen Kühlkanäle erzeugt wird, so dass das Schaummaterial und/oder der Klebstoff die offenen Kanäle und/oder die geschlossenen Kühlkanäle im Wesentlichen nicht verschließt und/oder verstopft. Hierdurch kann eine im bestimmungsgemäßen Betrieb des Batteriegehäuseteils ausreichende Kühlleistung sowie ein ausreichender Kühlfluss in den geschlossenen Kühlkanälen sichergestellt werden.

Eine weitere bevorzugte Ausgestaltung ist dadurch gekennzeichnet, dass das Schaummaterial und/oder der Klebstoff ein Mehrkomponentensystem, insbesondere ein Zweikomponentensystem, umfasst bzw. als Mehrkomponentensystem, insbesondere als Zweikomponentensystem, ausgebildet ist. Das Mehrkomponentensystem, insbesondere das Zweikomponentensystem, kann aus zwei verschiedenen Materialien bestehen bzw. zwei verschiedene Materialien umfassen, die in einem bestimmten Verhältnis gemischt werden können, um eine chemische Reaktion auszulösen, die zu einer Aushärtung oder Vernetzung führt.

Beispielsweise kann es sich bei dem Mehrkomponentensystem um eine Harz-Härter-Kombination handeln, wobei der Harz eine flüssige, reaktive Komponente sein kann und der Härter eine feste oder flüssige Komponente sein kann, die eine chemische Reaktion bei Vermischung mit dem Harz auslöst. Harz und Härter sind vorzugsweise so lange chemisch inert und stabil, bis sie gemischt werden. Nach einer Mischung kann das Mehrkomponentensystem dann schnell, robust und zuverlässig aushärten und so die vorgenannten Funktionseigenschaften des Schaummaterials und/oder des Klebstoffs zur Verfügung stellen.

Ferner ist es bevorzugt, dass das Mehrkomponentensystem, insbesondere das Zweikomponentensystem, im Wesentlichen unmittelbar vor dem Einbringen des Schaummaterials zwischen die zumindest eine Bodenplatte und die zumindest eine Batteriegehäuseaufnahme gemischt wird. Hierdurch kann sich erst während des Fügeschritts eine entsprechende Reaktion des Mehrkomponentensystems einstellen, die während des Fügeschritts zu den vorteilhaften Eigenschaften des Mehrkomponentensystems führt, insbesondere zu vorteilhaften mechanischen Eigenschaften des zumindest einen Batteriegehäuseteils beiträgt sowie vorzugsweise zu einer vorteilhaften Verbindung zwischen Batteriegehäuseaufnahme und Bodenplatte führt. Vorzugsweise wird das Mehrkomponentensystem in einem Mischer gemischt und anschließend auf die zumindest eine Batteriegehäuseaufnahme appliziert. Die Verwendung von Mehrkomponentensystemen, insbesondere von Zweikomponentensystemen, sind gegenüber Einkomponentensystemen vorteilhaft, da durch das Vermischen der Komponenten eine chemische Reaktion zur Festigung der Verbindung der beiden Fügepartner verursacht wird, wohingegen bei einem Einkomponentensystem beispielsweise eine zusätzlich Erwärmung benötigt wird.

Eine weitere bevorzugte Ausgestaltung ist dadurch gekennzeichnet, dass das Verfahren ferner umfasst: Bereitstellen wenigstens eines das zumindest eine Batteriegehäuseteil zumindest teilweise umgebenden Rahmens, insbesondere eines Stahlrahmens, sowie Fügen des Rahmens mit der Bodenplatte und der Batteriegehäuseaufnahme. Dabei ist es bevorzugt, dass der Rahmen zuerst an die Batteriegehäuseaufnahme gefügt wird, insbesondere mit der Batteriegehäuseaufnahme verbunden wird. Anschließend kann der Rahmen mit der Bodenplatte gefügt, insbesondere verbunden, werden. Ein solcher Rahmen ermöglicht insbesondere eine vorteilhafte Verbindung des zumindest einen Batteriegehäuseteils mit dem Fahrzeug und kann zudem die mechanischen Eigenschaften des zumindest einen Batteriegehäuseteils bzw. der Batteriewanne oder des gesamten Batteriegehäuses verbessern.

Bei einer weiteren bevorzugten Ausgestaltung weist die zumindest eine Batteriegehäuseaufnahme sich an den wenigstens einen im Wesentlichen plattenförmigen Bodenabschnitt anschließende im Wesentlichen plattenförmige Seitenwände auf. Derartige Seitenwände können den wenigstens einen im Wesentlichen plattenförmigen Bodenabschnitt insbesondere an allen Seiten umgeben und demnach zusammen mit dem plattenförmigen Bodenabschnitt einen Aufnahmeraum für das wenigstens eine Batteriemodul und/oder die wenigstens eine Batteriezelle definieren. Dies kann eine zuverlässige Anordnung der Batteriezellen und/oder Batteriemodule innerhalb der Batteriegehäuseaufnahme ermöglichen.

Eine weitere bevorzugte Ausgestaltung ist dadurch gekennzeichnet, dass die zumindest eine Batteriegehäuseaufnahme vorzugsweise sich an die Seitenwände anschließende Befestigungsabschnitte aufweist, wobei sich die Befestigungsabschnitte insbesondere im Wesentlichen parallel zu dem im Wesentlichen plattenförmigen Bodenabschnitt erstrecken und beispielsweise als umlaufender Kragen ausgebildet sein können. Mittels derartiger Befestigungsabschnitte kann das zumindest eine Batteriegehäuseteil und/oder die Batteriegehäuseaufnahme in zuverlässiger Weise mit einem Fahrzeug und/oder mit einem Rahmen, insbesondere mit einem Batterierahmen, verbunden werden.

Des Weiteren ist es bevorzugt, dass die im Wesentlichen plattenförmigen Seitenwände mittels eines Versieglungsmittels oder eines Vergussmittels, insbesondere mittels eines Polyurethan-Versieglungsmittels oder eines Polyurethan-Vergussmittels, mit dem wenigstens einen Rahmen verbunden und/oder versiegelt und/oder vergossen werden. Vorzugsweise findet eine solche Verbindung und/oder Versiegeln vor dem Fügeschritt statt, in welchem die zumindest eine Bodenplatte und die zumindest eine Batteriegehäuseaufnahme gefügt werden. Des Weiteren ist es bevorzugt, dass das Versieglungsmittel und/oder das Vergussmittel erst dann appliziert wird, wenn der wenigstens eine Rahmen bereits mit der zumindest einen Batteriegehäuseaufnahme verklebt und/oder verspannt wurde. In einem solchen Fall wird der zu versiegelnde oder zu vergießende Fügespalt zunächst vermessen, anschließend die Füllmenge in den einzelnen Bereichen bestimmt und dann das Versieglungsmittel und/oder das Vergussmittel appliziert. Mittels eines solchen Versieglungsmittels und/oder Vergussmittels kann beispielsweise verhindert werden, dass ungewollte Flüssigkeit in die Batteriegehäuseaufnahme eintritt. Zudem kann die Verwendung eines Versieglungsmittels und/oder eines Vergussmittels vorteilhaft im Hinblick auf die Isolationseigenschaften des zumindest einen Batteriegehäuseteils sein. Bei dem Versieglungsmittel und/oder dem Vergussmittel kann es sich beispielsweise auch um ein Schaummaterial, insbesondere um 2K-Polyurethan handeln.

Eine weitere bevorzugte Ausgestaltung ist dadurch gekennzeichnet, dass die Befestigungsabschnitte mit dem wenigstens einen Rahmen verklebt werden und/oder dass die zumindest eine Bodenplatte mit dem Rahmen verklebt wird. Vorzugsweise werden zunächst die Befestigungsabschnitte mit dem die Batteriegehäuseaufnahme wenigstens teilweise umgebenden Rahmen verklebt, wobei anschließend, vorzugsweise im Rahmen des Fügeschritts von Batteriegehäuseaufnahme und Bodenplatte, der Rahmen mit der Bodenplatte verklebt und/oder gefügt wird. Hierdurch können vorteilhafte mechanische Eigenschaften des zumindest einen Batteriegehäuseteils zur Verfügung gestellt werden.

Vorgenannte Aufgabe wird gemäß einem zweiten Aspekt der vorliegenden Erfindung durch ein Batteriegehäuseteil für ein elektrisch angetriebenes Fahrzeug gelöst, wobei das Batteriegehäuseteil umfasst: zumindest eine Batteriegehäuseaufnahme zur zumindest teilweisen Aufnahme von zumindest einer Batteriezelle und/oder zumindest einem Batteriemodul sowie zumindest eine mit der zumindest einen Batteriegehäuseaufnahme verbundenen Bodenplatte, wobei zwischen der zumindest einen Batteriegehäuseaufnahme, insbesondere einem im Wesentlichen plattenförmigen Bodenabschnitt der zumindest einen Batteriegehäuseaufnahme, und der zumindest einen Bodenplatte eine Mehrzahl an geschlossenen Kühlkanälen angeordnet ist, wobei das Batteriegehäuseteil gemäß einem Verfahren nach dem ersten Aspekt der Erfindung ausgestaltet ist.

Vorgenannte Aufgabe wird gemäß einem dritten Aspekt der vorliegenden Erfindung durch eine Vorrichtung zur Herstellung eines Batteriegehäuseteils, insbesondere einer Batteriewanne, für ein elektrisch angetriebenes Fahrzeug, umfassend: zumindest eine obere und bewegbare Werkzeughälfte zur Fixierung und zur Manipulation zumindest einer Bodenplatte; zumindest eine untere Werkzeughälfte aufweisend mindestens eine Andrückeinheit sowie wenigstens ein Druckkissen zum Fügen der zumindest einen Bodenplatte und einer Batteriegehäuseaufnahme; wobei die zumindest eine Batteriegehäuseaufnahme wenigstens einen im Wesentlichen plattenförmigen Bodenabschnitt umfasst und wobei der im Wesentlichen plattenförmige Bodenabschnitt an einer Oberfläche eine Mehrzahl an Kanälen umfasst, dadurch gelöst, dass die Vorrichtung ferner zumindest ein Heizmittel umfasst, so dass das wenigstens eine Druckkissen mit temperierter Luft, insbesondere mit temperierter Druckluft, beaufschlagbar oder befüllbar ist. Die mit einer derartigen Vorrichtung einhergehenden Vorteile sind bereits voranstehend im Zusammenhang mit einem Verfahren gemäß dem ersten Aspekt beschrieben.

Vorzugsweise fixiert die obere Werkzeughälfte die Bodenplatte über eine Vakuumeinheit, so dass diese in vorteilhafter Weise ausgerichtet und fixiert werden kann. Zum Verfügen von Bodenplatte und mit Schaummaterial und/oder Klebstoff versehener Batteriegehäuseaufnahme kann die obere Werkzeughälfte solange bewegt, insbesondere hydraulisch verfahren, werden, bis die von der oberen Werkzeughälfte aufgenommene Bodenplatte im Wesentlichen an der Batteriegehäuseaufnahme anliegt. Eine entsprechende Position kann dann beispielsweise mechanisch über Bolzen arretiert werden. Beispielsweise können die Bodenplatte und die mit dem Rahmen verbundene Batteriegehäuseaufnahme auch mittels einer Hydraulik arretiert werden. Die für das weitere Fügeverfahren benötigte Andrückkraft kann dann über das wenigstens eine Druckkissen zur Verfügung gestellt.

Des Weiteren ist es bevorzugt, dass das wenigstens eine Druckkissen mit temperierter Luft befüllt wird, wodurch sich ein Andrückdruck gleichförmig und temperiert aufbauen kann, um dem Druck des Klebstoffs und/oder des Schaummaterials entgegenzuwirken. Durch eine entsprechende Temperierung kann die Zykluszeit des Fügeprozesses reduziert werden und zudem unabhängig von der Umgebungstemperatur im Wesentlichen robuste Parameter des Fügeprozesses ermöglicht werden. Bei der temperierten Luft, insbesondere der temperierten Druckluft, kann es sich beispielsweise um beheizte oder gekühlte Luft handeln. Zudem kann durch die temperierte Luft ein gleichmäßiger Temperaturverlauf im Werkzeug eingestellt werden, wodurch ein Verzug der miteinander zu fügenden Bauteile vermieden werden kann, so dass Fertigungstoleranzen zuverlässig eingehalten werden können.

Vorzugsweise wird die obere Werkzeughälfte beispielsweise mittels zumindest einer Scharnierbefestigung zunächst verschwenkt. Bei Erreichen eines Mindestabstands zwischen zu fügender Bodenplatte und Batteriegehäuseaufnahme wird die obere Werkzeughälfte anschließend im Wesentlichen vertikal und/oder linear bewegt. Insbesondere wird die obere Werkzeughälfte derart bewegt, dass die zumindest eine Bodenplatte und die wenigstens eine Batteriegehäuseaufnahme planparallel aufeinander zu bewegt werden. Hierdurch kann in vorteilhafter Weise ein Scheren der Verbindung zwischen Batteriegehäuseaufnahme, Rahmen und/oder Bodenplatte vermieden werden. Ebenfalls hat sich eine derartige Ausgestaltung dahingehend als vorteilhaft erwiesen, dass die in der Vorrichtung verbleibende Luft minimiert werden kann, so dass der Fügeprozess von Bodenplatte und Batteriegehäuseaufnahme weiter verbessert werden kann.

Nach der im Wesentlichen vertikalen, linearen und/oder planparallelen Bewegung der oberen Werkzeughälfte wird diese auf einer Arretierung aufgesetzt und/oder mittels einer Arretierung arretiert. Beispielsweise kann es sich um eine hydraulische und/oder eine mechanische Arretierung handeln.

Es ist bevorzugt, dass die Vorrichtung dazu ausgebildet ist, ein Verfahren gemäß dem ersten Aspekt durchzuführen.

Die oben beschriebenen, zunächst grundsätzlich für sich alleine stehenden Ausführungsformen und beispielhaften Ausgestaltungen aller Aspekte der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Nachfolgend wird die Erfindung anhand von Ausführungsbeispielen zeigenden Zeichnungen näher erläutert. Es zeigen jeweils schematisch:
- Fig. 1: eine schematische Ansicht eines Verfahrens zur Herstellung eines ersten Ausführungsbeispiels eines Batteriegehäuseteils;
- Fig. 2: eine schematische Ansicht eines mittels des Verfahrens hergestellten ersten Ausführungsbeispiels eines Batteriegehäuseteils; sowie
- Fig. 3: eine schematische Ansicht eines Verfahrens zur Herstellung eines zweiten Ausführungsbeispiels eines Batteriegehäuseteils.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

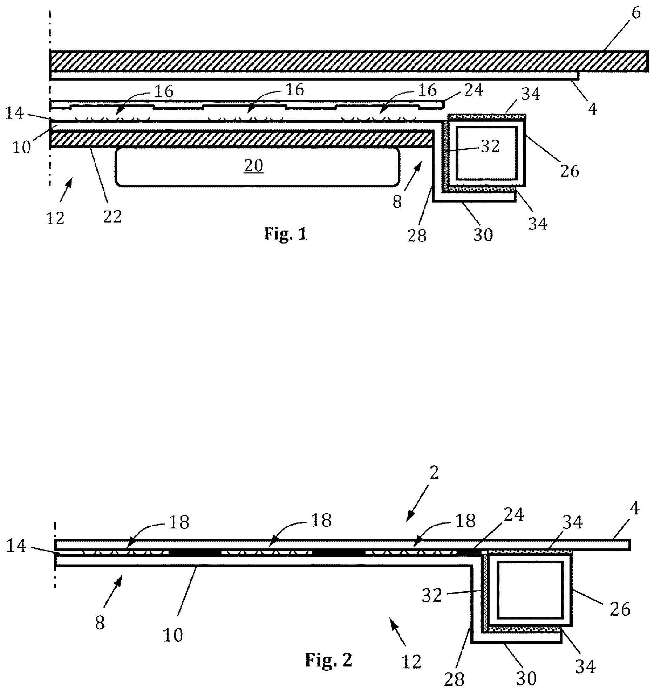

Fig. 1 und 2 zeigen eine schematische Ansicht eines Verfahrens zur Herstellung zumindest eines ersten Ausführungsbeispiel eines Batteriegehäuseteils 2 bzw. ein mittels des Verfahrens hergestelltes erstes Ausführungsbeispiel eines Batteriegehäuseteils 2. Im Rahmen des vorgenannten Verfahrens wird eine Bodenplatte 4 mittels einer ersten vorzugsweise bewegbaren oberen Werkzeughälfte 6 zur Verfügung gestellt. Ebenfalls wird ein Batteriegehäuseaufnahme 8 zur Verfügung gestellt, welche zur Aufnahme von zumindest einer Batteriezelle und/oder zumindest einem Batteriemodul dient.

Die Batteriegehäuseaufnahme 8 weist einen sich im Wesentlichen horizontal erstreckenden, plattenförmigen Bodenabschnitt 10 auf, welcher an seiner von einem Aufnahmeraum 12 für die Batteriemodule und/oder Batteriezellen weg zeigenden Oberfläche 14 eine Mehrzahl an offenen Kanälen 16 aufweist.

Im Rahmen des Fügens der Bodenplatte 4 und der Batteriegehäuseaufnahme 8 werden die offenen Kanäle dann mittels der Bodenplatte 4 verschlossen, so dass geschlossene Kühlkanäle 18 zur Verfügung gestellt werden (siehe Fig. 2).

Während des Fügens wird die Batteriegehäuseaufnahme 8 vorzugsweise mittels wenigstens eines Druckkissens 20 oder einer Mehrzahl von Druckkissen 20 an die Bodenplatte 4 gedrückt. Dabei übt das wenigstens eine Druckkissen 20 den Druck auf die Batteriegehäuseaufnahme 8 nicht unmittelbar, sondern mittels einer Andrückeinheit 22 bzw. einer zweiten Werkzeughälfte aus. Das wenigstens eine Druckkissen 20 ist mit einem Druck bzw. mit Luft beaufschlagbar, wobei der Druck indikativ für die von dem wenigstens einen Druckkissen 20 ausgeübte Andrückkraft bzw. den Andrückdruck ist. Die Höhe des Drucks zur Beaufschlagung des wenigstens einen Druckkissens 20 ist regelbar und/oder steuerbar und kann während des Fügeschritts aufrechterhalten oder angepasst werden. Vorzugsweise ist die Druckluft temperiert, so dass durch das wenigstens eine Druckkissen 20 eine Temperierung während des Fügeschritts ermöglicht werden kann. Die Verwendung von zumindest einem als Gewebeschlauch ausgestaltetem Druckkissen 20 hat sich in der Praxis hinsichtlich einer ausreichenden Erwärmung sowie einer gewünschten Kraftverteilung als vorteilhaft erwiesen.

Vor dem Fügeschritt der Batteriegehäuseaufnahme 8 und der Bodenplatte 4 kann zwischen die Bodenplatte 4 und die Batteriegehäuseaufnahme 8 ein Schaummaterial 24 eingebracht werden, welches insbesondere dazu dient, die mechanischen Eigenschaften des Batteriegehäuseteils 2 zu verbessern und die Verbindung zwischen Bodenplatte 4 und Batteriegehäuseaufnahme 8 zu verbessern. Beispielsweise kann weniger Schaummaterial 24 in die Bereiche der offenen Kanäle 16 eingebracht werden, so dass die offenen Kanäle 16 bzw. die nach dem Fügen geschlossenen Kühlkanäle 18 nicht verstopfen und ausreichend Kühlfluid durch die geschlossenen Kühlkanäle 18 fließen kann (siehe Fig. 1). Ebenfalls kann beispielsweise kein Schaummaterial 24 in den Bereichen der offenen Kanäle 16 angeordnet werden, so dass entsprechend auch kein Schaummaterial 24 in den Bereichen der geschlossenen Kühlkanäle 18 angeordnet ist (siehe Fig. 2).

Beispielsweise kann das Batteriegehäuseteil 2 einen das Batteriegehäuseteil 2 zumindest teilweise umfassenden Rahmen 26 aufweisen. Der Rahmen 26 wird beispielsweise zunächst mit der Batteriegehäuseaufnahme 8 verbunden. Hierzu weist die Batteriegehäuseaufnahme 8 vorzugsweise sich an den plattenförmigen Bodenabschnitt 10 anschließende Seitenwände 28 sowie sich an die Seitenwände 28 anschließende Befestigungsabschnitte 30 auf. Die plattenförmigen Seitenwände 28 sind beispielsweise mittels eines Polyurethan-Versieglungsmittels 32, insbesondere mit einer 2k-Polyurethan Vergussmasse, mit dem Rahmen 26 versiegelt bzw. vergossen und/oder verbunden.

Auch die Befestigungsabschnitte 30 sind an ihren zu dem Rahmen 26 zeigenden Oberflächen beispielweise mittels Klebstoff 34 mit dem Rahmen 26 verklebt. Ebenfalls kann auf der einen Seitenfläche des Rahmens 26 Klebstoff 34 angeordnet sein, wobei der Rahmen 26 mittels des Klebstoffs mit der Bodenplatte 4 verklebt werden kann.

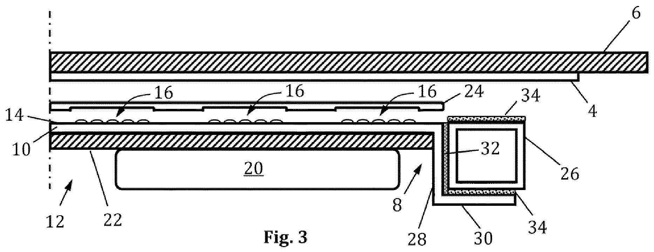

Fig. 3 zeigt eine schematische Ansicht eines Verfahrens zur Herstellung eines zweiten Ausführungsbeispiels eines Batteriegehäuseteils 2. Im Unterschied zu dem in Fig. 1 und 2 dargestellten ersten Ausführungsbeispiel des Batteriegehäuseteils 2 sind die Kanäle 16 auf der Oberfläche des plattenförmigen Bodenabschnitts 10 bereits als geschlossene Kühlkanäle 18 vorgesehen, so dass die geschlossenen Kühlkanäle 18 nicht erst durch Fügen von Bodenplatte 4 und Batteriegehäuseaufnahme 8 entstehen. Hierdurch kann die Dichtheit der geschlossenen Kühlkanäle 18 verbessert werden.

Die in dieser Spezifikation beschriebenen beispielhaften Ausführungsformen/Ausführungsbeispiele der vorliegenden Erfindung sollen sowohl einzeln als auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugszeichenliste

- 2: Batteriegehäuseteil
- 4: Bodenplatte
- 6: obere Werkzeughälfte
- 8: Batteriegehäuseaufnahme
- 10: plattenförmiger Bodenabschnitt
- 12: Aufnahmeraum
- 14: Kanäle aufweisende Oberfläche des plattenförmigen Bodenabschnitts
- 16: Kanäle
- 18: geschlossene Kühlkanäle
- 20: Druckkissen
- 22: Andrückeinheit
- 24: Schaummaterial
- 26: Rahmen
- 28: Seitenwand
- 30: Befestigungsabschnitt
- 32: Versieglungsmittel
- 34: Klebstoff

## Patentansprüche

1. Verfahren zur Herstellung zumindest eines Batteriegehäuseteils (2), insbesondere einer Batteriewanne, für ein elektrisch angetriebenes Fahrzeug, umfassend die folgenden Schritte:
- Bereitstellen zumindest einer Bodenplatte (4);
- Bereitstellen zumindest einer Batteriegehäuseaufnahme (8) zur zumindest teilweisen Aufnahme von zumindest einer Batteriezelle und/oder zumindest einem Batteriemodul, wobei die zumindest eine Batteriegehäuseaufnahme (8) wenigstens einen im Wesentlichen plattenförmigen Bodenabschnitt (10) umfasst und wobei der im Wesentlichen plattenförmige Bodenabschnitt (10) an einer Oberfläche (14) eine Mehrzahl an Kanälen (16) umfasst;
- Fügen der zumindest einen Bodenplatte (4) und der zumindest einen Batteriegehäuseaufnahme (8) miteinander, wobei die die Mehrzahl an Kanälen (16) aufweisende Oberfläche (14) des plattenförmigen Bodenabschnitts (10) der Batteriegehäuseaufnahme (8) vorzugsweise zu der Bodenplatte (4) gerichtet ist,
- Andrücken der zumindest einen Bodenplatte (4) und der zumindest einen Batteriegehäuseaufnahme (8) mittels wenigstens eines Druckkissens (20),
- wobei das wenigstens eine Druckkissen (20) die Batteriegehäuseaufnahme (8), insbesondere die von der Bodenplatte (4) abgewandte Oberfläche des plattenförmigen Bodenabschnitts (10) der Batteriegehäuseaufnahme (8), unmittelbar oder mittelbar über eine Andrückeinheit (22) an die Bodenplatte (4) andrückt.

2. Verfahren nach Anspruch 1,
**dadurch gekennzeichnet,**
- **dass** das wenigstens eine Druckkissen (20) mit einem Druck beaufschlagbar ist, wobei der beaufschlagte Druck indikativ für die von dem wenigstens einen Druckkissen (20) ausgeübte Andrückkraft und/oder für den von dem wenigstens einen Druckkissen (20) ausgeübten Andrückdruck ist und,
- **dass** insbesondere die Höhe des Drucks zur Beaufschlagung des wenigstens einen Druckkissens (20) regelbar ist.

3. Verfahren nach Anspruch 1 oder 2,
**dadurch gekennzeichnet,**
- **dass** das wenigstens eine Druckkissen als wenigstens ein Druckschlauch (20), insbesondere als wenigstens ein Gewebedruckschlauch (20), ausgebildet ist, und
- **dass** der wenigstens eine Druckschlauch (20) mit temperierter Luft, insbesondere temperierter Druckluft, beaufschlagbar oder befüllbar ist.

4. Verfahren nach einem der Ansprüche 1 bis 3,
**dadurch gekennzeichnet,**
- **dass** vor dem Schritt des Fügens ein Schaummaterial (24) zwischen die zumindest eine Bodenplatte (4) und die zumindest eine Batteriegehäuseaufnahme (8) eingebracht wird.

5. Verfahren nach Anspruch 4,
**dadurch gekennzeichnet,**
- **dass** das Schaummaterial (24) auf die die Mehrzahl an Kanälen (16) aufweisende Oberfläche (14) des plattenförmigen Bodenabschnitts (10) der zumindest einen Batteriegehäuseaufnahme (8) aufgebracht wird.

6. Verfahren nach einem der Ansprüche 1 bis 5,
**dadurch gekennzeichnet,**
- **dass** die Mehrzahl an Kanälen (16) als Mehrzahl an offenen Kanälen ausgebildet ist, und
- **dass** durch das Andrücken der zumindest einen Bodenplatte (4) und der zumindest einen Batteriegehäuseaufnahme (8) eine Mehrzahl an geschlossenen Kühlkanälen (18) zur Verfügung gestellt wird.

7. Verfahren nach Anspruch 4 oder 5 in Verbindung mit Anspruch 6,
**dadurch gekennzeichnet,**
- **dass** das Schaummaterial (24) im Wesentlichen nur auf die die offenen Kanäle (16) begrenzenden Wandungen und/oder Rippen aufgebracht wird, und/oder,
- **dass** während des Fügeschritts eine Gegenkraft, beispielsweise ein pneumatischer Druck, zumindest teilweise innerhalb der offenen Kanäle (16) und/oder der Kühlkanäle (18) erzeugt wird, so dass das Schaummaterial (24) die offenen Kanäle (16) und/oder die Kühlkanäle (18) im Wesentlichen nicht verschließt.

8. Verfahren nach einem der Ansprüche 4 bis 7,
**dadurch gekennzeichnet,**
- **dass** das Schaummaterial (24) ein Mehrkomponentensystem, insbesondere ein Zweikomponentensystem, umfasst, und
- **dass** das Mehrkomponentensystem, insbesondere das Zweikomponentensystem, im Wesentlichen unmittelbar vor dem Einbringen des Schaummaterials (24) zwischen die zumindest eine Bodenplatte (4) und die zumindest eine Batteriegehäuseaufnahme (8) gemischt wird.

9. Verfahren nach einem der Ansprüche 1 bis 8,
**dadurch gekennzeichnet,**
- **dass** das Verfahren ferner umfasst:
- Bereitstellen wenigstens eines das zumindest eine Batteriegehäuseteil (2) zumindest teilweise umgebenden Rahmens (26), insbesondere eines Stahlrahmens, sowie
- Fügen des Rahmens (26) mit der Bodenplatte (4) und der Batteriegehäuseaufnahme (8).

10. Verfahren nach einem der Ansprüche 1 bis 9,
**dadurch gekennzeichnet,**
- **dass** die zumindest eine Batteriegehäuseaufnahme (8) sich an den wenigstens einen im Wesentlichen plattenförmigen Bodenabschnitt (10) anschließende Seitenwände (28) aufweist und,
- **dass** die zumindest eine Batteriegehäuseaufnahme (8) vorzugsweise sich an die Seitenwände (28) anschließende Befestigungsabschnitte (30) aufweist, wobei sich die Befestigungsabschnitte (30) insbesondere im Wesentlichen parallel zu dem im Wesentlichen plattenförmigen Bodenabschnitt (10) erstrecken.

11. Verfahren nach Ansprüchen 9 und 10,
**dadurch gekennzeichnet,**
- **dass** die im Wesentlichen plattenförmigen Seitenwände (28) mittels eines Versieglungsmittels (32), insbesondere mittels eines Polyurethan-Versieglungsmittels, mit dem wenigstens einen Rahmen (26) versiegelt und/oder verbunden werden.

12. Verfahren nach einem der Ansprüche 8 bis 11,
**dadurch gekennzeichnet,**
- **dass** die Befestigungsabschnitte (30) mit dem wenigstens einen Rahmen (26) verklebt werden und/oder,
- **dass** die zumindest eine Bodenplatte (4) mit dem Rahmen verklebt wird.

13. Batteriegehäuseteil für ein elektrisch angetriebenes Fahrzeug, umfassend
- zumindest ein Batteriegehäuseaufnahme (8) zur zumindest teilweisen Aufnahme von zumindest einer Batteriezelle und/oder zumindest einem Batteriemodul;
- zumindest eine mit der zumindest einen Batteriegehäuseaufnahme (8) verbundenen Bodenplatte (4),
- wobei zwischen der zumindest einen Batteriegehäuseaufnahme (8), insbesondere einem im Wesentlichen plattenförmigen Bodenabschnitt (10) der zumindest einen Batteriegehäuseaufnahme (8), und der zumindest einen Bodenplatte (4) eine Mehrzahl an Kühlkanälen (18) angeordnet ist,
**dadurch gekennzeichnet,**
- **dass** das Batteriegehäuseteil (2) gemäß einem Verfahren nach einem der Ansprüche 1 bis 12 hergestellt ist.

14. Vorrichtung zur Herstellung eines Batteriegehäuseteils (2), insbesondere einer Batteriewanne, für ein elektrisch angetriebenes Fahrzeug, umfassend:
- zumindest eine obere und bewegbare Werkzeughälfte (6) zur Fixierung und zur Manipulation zumindest einer Bodenplatte (4);
- zumindest eine untere Werkzeughälfte aufweisend mindestens eine Andrückeinheit (22) sowie wenigstens ein Druckkissen (22) zum Fügen der zumindest einen Bodenplatte (4) und zumindest einer Batteriegehäuseaufnahme (8);
- wobei die zumindest eine Batteriegehäuseaufnahme (8) wenigstens einen im Wesentlichen plattenförmigen Bodenabschnitt (10) umfasst und wobei der im Wesentlichen plattenförmige Bodenabschnitt (10) an einer Oberfläche (14) eine Mehrzahl an Kanälen (16) umfasst;
**dadurch gekennzeichnet,**
- **dass** die Vorrichtung ferner zumindest ein Heizmittel umfasst, so dass das wenigstens eine Druckkissen (20) mit temperierter Luft, insbesondere mit temperierter Druckluft, beaufschlagbar oder befüllbar ist.

15. Vorrichtung nach Anspruch 14,
**dadurch gekennzeichnet,**
- **dass** die Vorrichtung dazu ausgebildet ist, ein Verfahren nach einem der Ansprüche 1 bis 12 durchzuführen.
